(19) Europäisches Patentamt
European Patent Office
Office européen des brevets

(11) **EP 1 819 035 A2**

(12) **DEMANDE DE BREVET EUROPEEN**

(43) Date de publication:
**15.08.2007 Bulletin 2007/33**

(51) Int Cl.:
***H02N 1/08*** *(2006.01)*

(21) Numéro de dépôt: **07101866.7**

(22) Date de dépôt: **07.02.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **13.02.2006  FR 0650511**

(71) Demandeurs:
• **COMMISSARIAT A L'ENERGIE ATOMIQUE 75752 Paris Cedex 15 (FR)**
• **COMMISSARIAT A L'ENERGIE ATOMIQUE 75015 Paris (FR)**

(72) Inventeurs:
• **Jager, Thomas**
  **38000 Grenoble (FR)**
• **Chaillout, Jean-Jacques**
  **38960 Saint-Etienne-de-Crossey (FR)**
• **Despesse, Ghislain**
  **38000 Grenoble (FR)**

(74) Mandataire: **Poulin, Gérard**
  **Société BREVATOME**
  **3, rue du Docteur Lancereaux**
  **75008 Paris (FR)**

(54) **Système de conversion d'énergie à distance d'entrefer ajustable et procédé correspondant**

(57)    La présente invention a principalement pour objet un système de conversion d'une énergie mécanique en énergie électrique par conversion électrostatique, comportant au moins une électrode fixe (2) et au moins une électrode mobile (4) apte à être mise en vibration par l'énergie mécanique, lesdites électrodes fixe (2) et mobile (4) étant séparées au repos par un distance d'entrefer (Δ), ledit système comportant des moyens (12) pour modifier la distance d'entrefer en fonction de la variation de l'amplitude des vibrations de l'électrode mobile (4).

   La présente invention a également pour objet un procédé de conversion d'énergie mettant en oeuvre un tel système.

FIG. 1

EP 1 819 035 A2

**Description**

La présente invention se rapporte à un système capable de récupérer de l'énergie mécanique provenant des mouvements de l'environnement (vibrations, chocs, écoulements, etc....) pour la convertir en énergie électrique, en utilisant le principe de conversion électrostatique.

Les systèmes connus de récupération d'énergie mécanique de vibration comportent généralement un socle fixé rigidement à un support en mouvement, une partie mobile effectuant du fait de son inertie un déplacement relatif par rapport à cette partie fixe, une liaison souple autorisant un déplacement relatif entre les parties fixe et mobile et un convertisseur permettant de transformer l'énergie mécanique de la partie mobile pour la récupérer sous une forme différente (électrique par exemple).

Dans le cas d'une structure de conversion électrostatique, telle que décrite dans le document US 2005093302 A1, la conversion de l'énergie se fait au travers d'un condensateur à capacité variable. Ce condensateur est formé par des électrodes liées au support vibrant fixe et des électrodes liées à la masse mobile. Le mouvement relatif de ces électrodes entraîne une variation de la valeur de la capacité du condensateur. Cette variation de capacité est alors exploitée pour transformer l'énergie du mouvement mécanique en une énergie électrique.

Les structures de conversion électrostatique peuvent être classées en trois catégories.

- Une structure comportant une électrode fixe et une électrode mobile, les électrodes étant disposées dans deux plans parallèles, l'électrode mobile étant disposée à distance de l'électrode fixe et s'éloignant et se rapprochant de l'électrode fixe du fait des vibrations.
- Une structure comportant une électrode fixe munie de doigts, une masse mobile munie de doigts, les doigts de l'électrode fixe et de la masse mobile étant interdigités. Lors du déplacement de la masse mobile dans la direction des doigts, le chevauchement entre les doigts de l'électrode fixe et de la masse mobile varie dans un plan.
- Pour la troisième famille, la structure est similaire à la structure précédente, cependant le déplacement de la masse mobile s'effectue perpendiculairement à la direction des doigts.

La distance séparant au repos l'électrode fixe et l'électrode mobile est appelée distance d'entrefer. Cette distance est fixe pour chacun des systèmes décrits ci-dessus. Ainsi l'amplitude de déplacement de l'électrode mobile par rapport à l'électrode mobile est invariable, celle-ci est déterminée lors de la fabrication du système. L'amplitude maximale de vibration admissible correspond, dans chaque cas, à la valeur de l'entrefer au repos entre partie fixe et partie mobile.

Les structures des systèmes de conversion d'énergie connus sont conçues pour être parfaitement adaptées à un environnement bien défini en terme d'amplitude, de vibration et de déformation. De fait, ces structures deviennent moins efficaces, voire inutilisables, pour des environnements où ces paramètres sont amenés à varier au cours du temps.

En effet, l'énergie électrique récupérée au cours du déplacement de la partie mobile dépend de la variation de capacité apparaissant lors de ce déplacement. Par exemple, dans le cas d'un fonctionnement à charge constante sur le condensateur à capacité variable, l'énergie théoriquement récupérable pour chaque cycle de récupération est donnée par :

$$E = 1/2 U_{charge} U_{décharge} (C_{max} - C_{min}),$$

$U_{charge}$ et $U_{décharge}$ étant les tensions de charge et de décharge aux bornes du condensateur, et $C_{max} - C_{min}$ représentant la variation maximale de capacité du condensateur.

Cette énergie est directement proportionnelle aux tensions sous lesquelles on injecte et on récupère la charge sur le condensateur, ainsi qu'à la variation de capacité obtenue au cours de ce mouvement.

Sur les structures de conversion électrostatique, les lois donnant la valeur de la capacité en fonction de la position relative X de la partie mobile et de la partie fixe sont de type $1/(X-\Delta)$ ou $1/(X-\Delta)^2$, dans lequel $\Delta$ est la valeur de la distance d'entrefer au repos. La capacité est donc minimale au repos lorsque X est nul, et maximale lorsque l'amplitude du mouvement se rapproche de la valeur de la distance d'entrefer.

On constate alors que pour maximiser l'énergie récupérée, il est préférable que les électrodes fixe et mobile se rapprochent le plus possible l'une de l'autre, ce qui rend maximale la capacité maximale $C_{max}$ et donc la variation finale de capacité $C_{max} - C_{min}$.

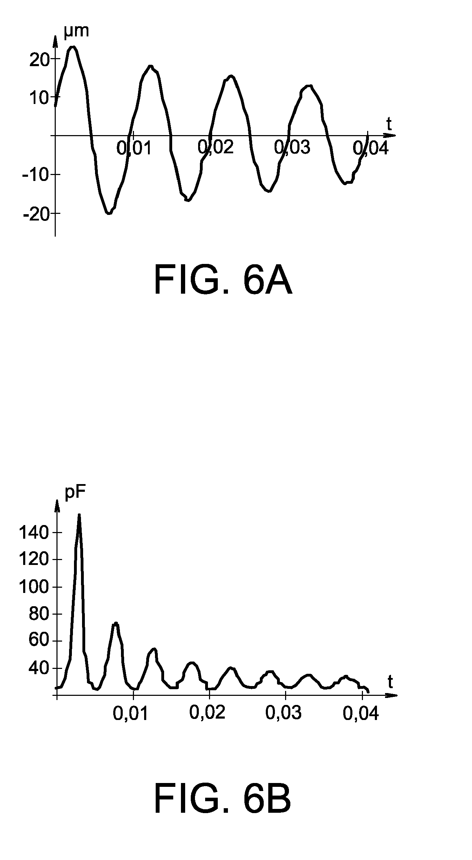

Les systèmes de conversion de type connu ne peuvent fonctionner de manière optimale qu'avec des sources de vibration stables en amplitude et/ou en fréquence. Or, ces sources de vibration remplissent rarement ces conditions de stabilité. Il en résulte qu'on ne peut maximiser en permanence la valeur de la capacité maximale $C_{max}$. Sur les figures 6A et 6B, a été représentée l'évolution de la capacité variable en fonction d'une excitation sinusoïdale d'amplitude décroissante, pour une structure de conversion de type connu dans le plan. On constate que la valeur de la capacité maximale $C_{max}$ diminue extrêmement rapidement avec l'amplitude de vibration : une variation d'amplitude de vibration de quelques microns, par exemple lorsqu'on passe d'une amplitude de 25 $\mu$m à une amplitude de 18 $\mu$m, se traduit par une variation totale de capacité qui passe de 170 pF à 70 pF. L'énergie récupérable est alors presque divisée par un facteur 3.

C'est par conséquent un but de la présente invention d'offrir un système de conversion d'une énergie mécanique vibratoire en énergie électrique pouvant fonctionner de manière optimale, notamment avec des sources de vibration ayant une amplitude variable.

**EXPOSÉ DE L'INVENTION**

Le but précédemment énoncé est atteint par un système de conversion d'énergie mécanique vibratoire en énergie électrique par conversion électrostatique ou capacitive, comportant au moins un condensateur à capacité variable formé par une électrode fixe et une électrode mobile, et des moyens pour modifier la distance au repos entre les deux électrodes, de manière à adapter le système aux caractéristiques, notamment à l'amplitude des vibrations de l'environnement extérieur, et par conséquent à l'amplitude des vibrations de l'électrode mobile par rapport à l'électrode fixe.

L'objet de l'invention permet de limiter l'influence de la variation de l'amplitude de vibration sur l'énergie finalement récupérable en rendant l'entrefer de la structure de conversion adaptable à son environnement.

En d'autres termes, on prévoit dans un mode de réalisation de rendre le système de conversion d'énergie accordable par une distance d'entrefer autodaptative avec la source de vibration, pour que le système soit toujours adapté pour optimiser la récupération d'énergie.

Cet accord peut être effectué avant une phase de récupération d'énergie par un réglage en fonction de l'amplitude des vibrations attendue, ou en continu pendant une telle phase par une commande à contre-réaction qui va détecter l'amplitude des vibrations et modifier en retour le système.

La présente invention a alors principalement pour objet un système de conversion d'une énergie mécanique en énergie électrique par conversion électrostatique ou capacitive, comportant au moins une électrode fixe et au moins une électrode mobile apte à être mise en vibration par l'énergie mécanique, lesdites électrodes fixe et mobile étant séparées au repos par un distance d'entrefer, ledit système comportant des moyens pour modifier la distance d'entrefer en fonction de la variation de l'amplitude des vibrations de l'électrode mobile.

Dans un mode de réalisation, les moyens de réglage permettent un réglage avant une étape de conversion d'énergie. Les moyens de réglage peuvent alors être formés par un jeu d'entretoises calibrées, destinées à être disposées entre l'électrode fixe et l'électrode mobile, un ou plusieurs entretoises pouvant être utilisées. Les moyens de réglage passifs peuvent également être interposés entre l'électrode fixe et l'électrode mobile, et être aptes à être commandés pour modifier la distance d'entrefer. Ils sont alors du type pignon-crémaillère ou glissière et vis sans fin.

La présente invention a également pour objet un procédé de fabrication d'un système selon la présente invention, par électroérosion et découpe laser

Dans un autre mode de réalisation, les moyens de réglage permettent une modification de la distance d'entrefer pendant une étape de conversion d'énergie.

Les moyens de réglage peuvent alors comporter un actionneur interposé entre l'électrode fixe et l'électrode mobile et une commande dudit actionneur. L'actionneur peut être un moteur, un vérin, des éléments piézoélectriques et/ou magnétostrictifs.

Dans un exemple de réalisation, la commande est manuelle.

Dans un exemple de réalisation, la commande est autonome et active l'actionneur automatiquement pour adapter la distance d'entrefer à la variation de l'amplitude de vibration. Une commande manuelle peut également être prévue, en plus de la commande automatique.

Dans cet exemple de réalisation, les moyens de réglage peuvent comporter des capteurs détectant la variation d'amplitude des vibrations, et dans lequel la commande comporte une unité électronique comportant des cartes de concordance entre des valeurs de distance d'entrefer et des intervalles d'amplitude de déplacement de la partie mobile permettant une récupération d'énergie optimale.

Les capteurs sont, par exemple du type accéléromètre ou butée de détection d'amplitude de variation.

La présente invention a également pour objet un procédé de fabrication d'un système selon l'invention, dans lequel l'actionneur est intégré sur du silicium.

L'actionneur peut être formé par des éléments piézoélectriques déposés par pulvérisation cathodique.

Le système peut, par exemple, comporter plusieurs électrodes mobiles en forme de doigts, et dans lequel l'électrode fixe comporte des doigts, les doigts de l'électrode fixe et les doigts mobiles étant interdigités.

Les doigts mobiles se déplacent soit selon leur plus grande dimension, soit perpendiculairement à leur plus grande dimension.

Les doigts peuvent avantageusement avoir une forme trapézoïdale.

La présente invention a également pour objet un procédé de conversion d'une énergie mécanique en énergie électrique mettant en oeuvre un système de conversion comportant au moins une électrode fixe et une électrode mobile en regard, et des moyens pour modifier la distance d'entrefer entre l'électrode fixe et l'électrode mobile, comportant l'étape :

- de réglage de la distance d'entrefer préalablement à la phase de conversion d'énergie.

Le procédé de conversion d'énergie selon l'invention peut alors comporter les étapes :

- de détermination de l'amplitude maximale de déplacement attendue de la partie mobile,
- de choix d'une distance d'entrefer maximale, ces étapes étant antérieures à l'étape de réglage de la distance d'entrefer.

La présente invention a également pour objet un procédé de conversion d'une énergie mécanique en énergie électrique mettant en oeuvre un système de conversion comportant au moins une électrode fixe et une électrode mobile en regard, et des moyens pour modifier la distance d'entrefer entre l'électrode fixe et l'électrode mobile, comportant l'étape :

- de réglage de la distance d'entrefer pendant la phase de conversion d'énergie.

Le procédé de conversion d'énergie selon l'invention peut alors comporter pendant la phase de conversion d'énergie, les étapes :

- de mesure de l'amplitude de déplacement de la partie mobile pendant la phase de conversion,
- de choix parmi une carte de concordance entre des valeurs de distance d'entrefer et des intervalles d'amplitude pour une récupération d'énergie optimale, ces étapes étant antérieures à l'étape de réglage de la distance d'entrefer.

**BRÈVE DESCRIPTION DES DESSINS**

La présente invention sera mieux comprise à l'aide de la description qui va suivre et des dessins annexés, sur lesquels :

- la figure 1 est une représentation d'un schéma de principe d'un système selon la présente invention au repos,
- la figure 2A est une représentation d'un exemple de réalisation d'un premier mode de réalisation d'un système de conversion d'énergie selon la présente invention dans une première configuration de réglage de la distance d'entrefer,
- la figure 2B est une représentation schématique dans une deuxième configuration de réglage de la distance d'entrefer du système de la figure 2A,
- la figure 3A est représentation schématique d'un deuxième exemple de réalisation du premier mode de réalisation d'un système de conversion selon la présente invention dans une première configuration de réglage de la distance d'entrefer,
- la figure 3B est une représentation schématique du système de la figure 3A, dans une deuxième configuration de réglage de la distance d'entrefer,
- la figure 4 est une représentation schématique d'un deuxième mode de réalisation d'un système de conversion selon la présente invention,
- la figure 5 représente un organigramme de fonctionnement du système de la figure 4,
- les figures 6A et 6B sont des représentations graphiques de l'évolution de la variation de capacité d'un système de conversion de l'état de la technique.

**EXPOSÉ DÉTAILLÉ DE MODES DE RÉALISATION PARTICULIERS**

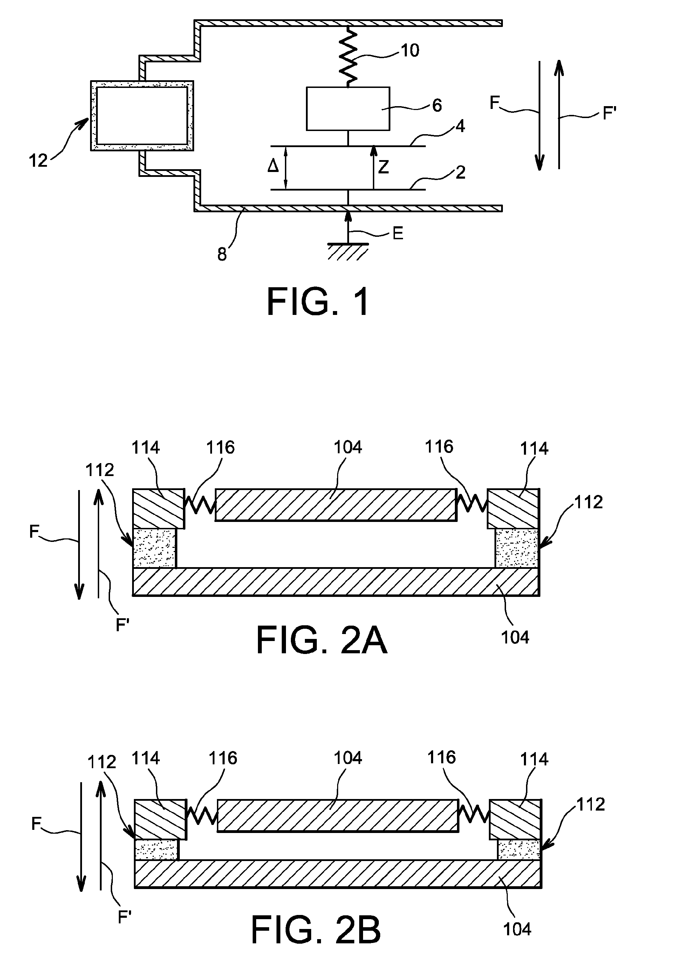

Sur la figure 1, on peut voir un schéma de principe d'un système selon la présente invention, comportant une électrode fixe 2 et une électrode mobile 4 solidaire en mouvement d'une masse mobile 6.

La masse mobile 6, et par conséquent l'électrode mobile 4 sont suspendues par un moyen de liaison souple 10 au socle fixe 8.

L'électrode fixe 2 est montée fixe sur un socle fixe 8. Le système est apte à être soumis à une excitation mécanique extérieure E, provoquant le déplacement de la masse mobile 6 et de l'électrode mobile 4 par rapport à l'électrode fixe 2 dans un sens F ou dans un sens F'.

L'électrode fixe 2 et l'électrode mobile 4 sont séparées par une distance z, la distance z peut varier en fonction de l'excitation mécanique E.

L'électrode fixe 2 et l'électrode mobile 4 forment ainsi un condensateur à capacité variable.

Au repos, tel que le système est représenté à la figure 1, les deux électrodes 2, 4 sont séparées par une distance, dite distance d'entrefer Δ.

Le système comporte également selon la présente invention, des moyens de réglage 12 de la distance d'entrefer Δ, aptes à écarter ou à rapprocher les deux électrodes 2, 4 pour augmenter ou réduire la distance d'entrefer Δ respectivement.

Comme nous le verrons dans la suite de la description, les moyens 12 peuvent être du type passif, c'est-à-dire que ceux-ci sont aptes à fixer une distance Δ avant une phase de récupération d'énergie en fonction d'une amplitude prévue de l'excitation mécanique, ou du type actif, les moyens de réglage peuvent, dans ce cas, modifier la distance Δ pendant la phase de récupération d'énergie en fonction de l'évolution de l'amplitude de l'énergie d'excitation.

Nous allons maintenant expliquer le fonctionnement de ce système.

Dés que le système est soumis à une accélération extérieure, la masse mobile 6, du fait de son inertie, est mise en mouvement relatif par rapport au socle fixe 8. La distance entre les électrodes fixe 2 et mobile 4 varie, provoquant une variation de la capacité électrique du système. L'énergie de ce mouvement est transformée et récupérée grâce à l'amortissement électrique généré par les forces électrostatiques s'exerçant entre les électrodes 2, 4 du condensateur.

Grâce au système de réglage de la distance Δ selon la présente invention, la distance Δ est adaptée afin d'optimiser la conversion d'énergie mécanique en énergie électrique en fonction de l'amplitude de l'énergie d'excitation. La variation de capacité du condensateur est ainsi maximisée tout au long du fonctionnement, garantissant ainsi une récupération d'énergie optimale.

Sur les figures 2A et 2B, on peut voir un premier exemple de réalisation d'un système selon la présente invention, comportant une partie fixe 102 reliée à une source d'énergie mécanique, une partie mobile 104, et des moyens de liaison souple 116 entre la partie fixe 102 et la partie mobile 104.

La partie mobile 104 est apte à se déplacer perpendiculairement à sa plus grande dimension dans les sens F et F', sous l'action de l'énergie mécanique à récupérer.

La source d'énergie mécanique est formée par les mouvements de l'environnement extérieur, sous forme par exemple des vibrations, de chocs, d'écoulements, etc.

Les parties fixe 102 et mobile 104 sont formées par des électrodes et sont en regard l'une de l'autre, formant ainsi un condensateur à capacité variable.

Les deux électrodes 102, 104 sont séparées par une distance z variable. Au repos cette distance z est appelée distance d'entrefer Δ.

Le système selon la présente invention comporte également des moyens 112 pour modifier la distance d'entrefer Δ. Ainsi au repos, les électrodes 102, 104 pourront être séparées d'une distance d'entrefer Δ en fonction du réglage imposé par les moyens 112.

Dans l'exemple représenté, l'électrode mobile 104 est suspendue à deux plots 114 fixes par les moyens de liaison souple 116.

Des moyens 112 de réglage de la distance Δ, au nombre de deux sont interposés entre les plots 114 et l'électrode fixe 102. Il est prévu, tel que représenté sur la figure 2, de modifier de manière symétrique les deux moyens 112, par ajout d'une cale de même épaisseur afin de maintenir l'électrode fixe 102 et l'électrode mobile 104 parallèles.

En fonction de l'amplitude des vibrations extérieures, la distance d'entrefer Δ est modifiée. Pour cela, les moyens 112 peuvent être formés par des calles ou des entretoises mécaniques calibrées. Ainsi l'amplitude de déplacement de l'électrode mobile 104 relativement à l'électrode fixe est adaptée à l'amplitude des vibrations converties par le système de conversion d'énergie.

Pour le système représenté à la figure 2A, on souhaite une variation d'amplitude plus importante, que sur la figure 2B, les cales 112 de réglage mises en oeuvre sont alors plus épaisses que celles mises en oeuvre pour le réglage de la configuration représentée à la figure 2B. La distance d'entrefer $\Delta_1$ est alors supérieure à la distance d'entrefer $\Delta_2$.

Cependant, ce type de moyens requiert un démontage du système à chaque fois que l'on souhaite modifier la distance d'entrefer Δ.

On peut également prévoir d'utiliser des moyens mécaniques plus complexes permettant par une commande de régler la distance d'entrefer Δ et ne requérant pas le démontage du système à chaque réglage. Les moyens 112 peuvent être du type système à glissière et vis sans fin, ou à pignon-crémaillère. Le système mécanique est interposé entre la partie mobile 104 et la partie fixe 102.

Par exemple dans le cas d'un système pignon-crémaillère, le pignon peut être solidaire de la partie fixe 102 et la crémaillère solidaire de la partie mobile 104. Suivant le sens de rotation du pignon, celui-ci engrène la crémaillère et provoque un rapprochement ou un éloignement relatif de la partie mobile 104 et de la partie fixe 102 suivant son sens de rotation.

L'amplitude maximale de déplacement attendue peut être évaluée de la manière suivante : on détermine tout d'abord la valeur de l'excitation au moyen d'un accéléromètre. Puis, en connaissant la raideur mécanique du système, on peut en déduire l'amplitude de déplacement.

Les moyens de réglage passifs sont particulièrement adaptés pour des systèmes de conversion macroscopiques, par exemple de volume de un ou plusieurs $cm^3$.

Ce type de système peut être réalisé par des techniques de mécanique de précision classiques, telles que l'électroérosion et la découpe laser. Ainsi, les éléments participant au réglage de la distance d'entrefer $\Delta$ peuvent être réalisés avec une précision de l'ordre de $\mu$m ; pour le réglage de la distance, on retrouvera également une précision de l'ordre du $\mu$m.

Le fonctionnement de ce système est similaire à celui décrit à la hauteur de la figure 1, et ne sera pas repris.

Les moyens de réglage passifs permettent d'augmenter le rendement de conversion d'énergie, cependant ceux-ci n'offrent pas la possibilité de modifier la valeur de la distance d'entrefer $\Delta$ en cours de récupération d'énergie, si l'amplitude de vibration venait à varier de manière inattendue.

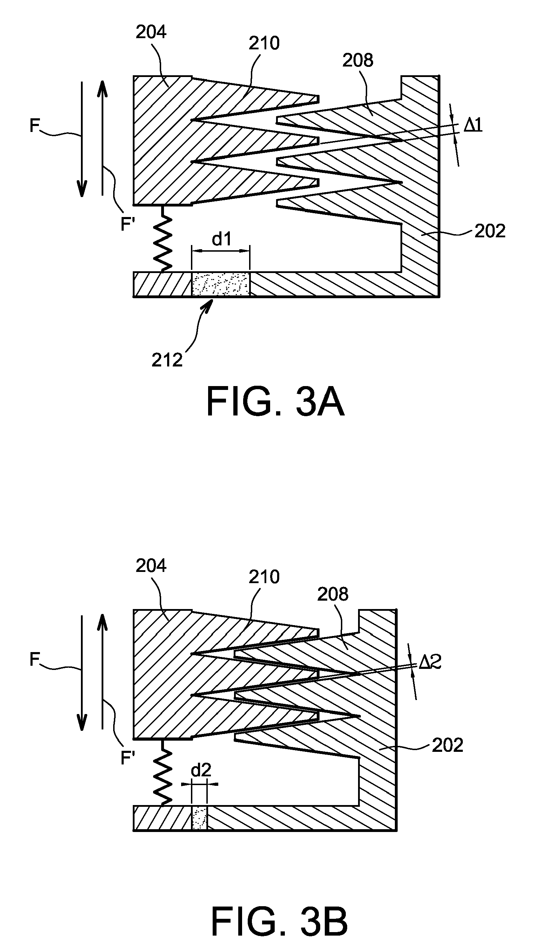

Sur les figures 3A et 3B, on peut voir un deuxième exemple de réalisation d'un système de conversion selon la présente invention, comportant une partie fixe 202 et une partie mobiles 204.

La partie fixe 202, ainsi que la partie mobile 204 comportent respectivement des doigts 208, 210 interdigités, formant des électrodes en regard. Ainsi chaque couple de faces de doigts 208, 210 en regard forme un condensateur à capacité variable.

Dans l'exemple représenté, la partie mobile 204 peut se déplacer dans une direction orthogonale à l'axe des doigts 208, 210, dans un sens F ou dans un sens F'.

Mais on peut prévoir un déplacement selon une direction parallèle à l'axe des doigts.

Dans l'exemple représenté, les doigts 208, 210 ont avantageusement un profil trapézoïdal de manière à faciliter le réglage de la distance d'entrefer $\Delta$. En effet, quel que soit le déplacement de l'électrode mobile par apport à l'électrode fixe, c'est-à-dire qu'il soit selon l'axe des doigts ou orthogonal à celui-ci, on peut modifier la distance d'entrefer en modifiant la distance entre les électrodes de la même manière, c'est-à-dire selon l'axe des doigts.

Toute forme de doigt peut convenir, par exemple des doigts de forme rectangulaire ou arrondie.

Le système comporte également des moyens 212 pour modifier la distance d'entrefer $\Delta$. Comme pour l'exemple de la figure 2, ils peuvent être formés par des calles ou des entretoises mécaniques calibrées en fonction de l'application, ou par des dispositifs mécaniques plus complexes tels que décrits précédemment.

Ce type de moyens permet un réglage passif du système, tel que décrit en relation avec la figure 2.

On peut également prévoir de réaliser des systèmes comportant des moyens de réglage de la distance d'entrefer $\Delta$, dits actifs, comportant un actionneur apte à adapter de manière évolutive et sans intervention extérieure la distance d'entrefer $\Delta$ à la variation de l'amplitude des vibrations du milieu ambiant, lesdites vibrations étant symbolisées par l'énergie d'excitation E sur la figure 1.

L'entretoise dans la configuration de la figure 3A a une épaisseur $d_1$ plus grande que l'épaisseur $d_2$ de l'entretoise de la figure 3B, la distance d'entrefer $\Delta_1$ est donc supérieure à la distance d'entrefer $\Delta_2$.

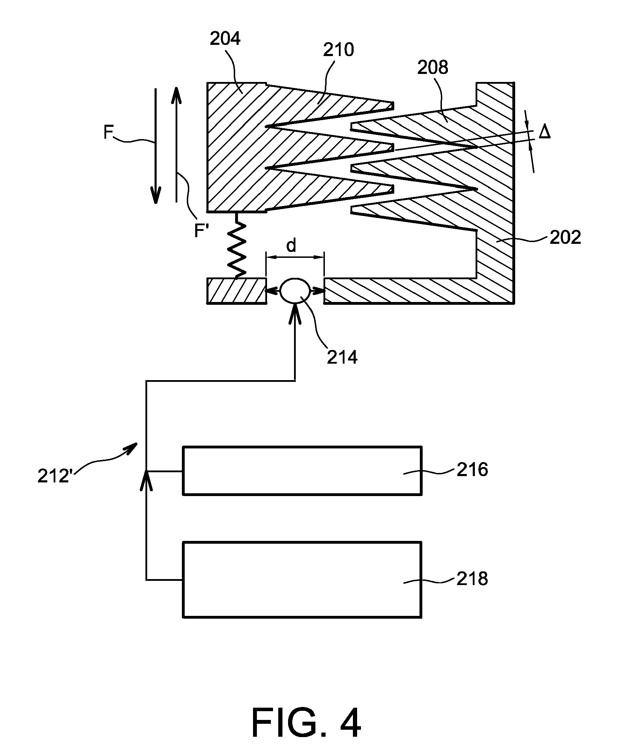

Sur la figure 4, on peut voir schématisé un système de conversion d'énergie comportant des moyens de réglage actifs.

Nous reprendrons les mêmes références que celles utilisées pour la description des figures 3A et 3B, sauf pour les moyens de réglages qui seront référencés 212'.

Les moyens de réglage 212' comportent un actionneur 214 pour régler la distance d'entrefer $\Delta$, disposé entre la partie mobile 204 et la partie fixe 202. Cet actionneur 214 peut être de tout type, comme par exemple un moteur, un vérin, des éléments piézoélectriques et/ou des éléments magnétostrictifs.

L'actionneur 214 est disposé entre la partie mobile 204 et la partie fixe 202, de manière à, lorsque l'actionneur 214 est activé, provoquer le rapprochement ou l'éloignement des parties fixe et mobile.

On peut également envisager d'utiliser un système à glissière-vis sans fin ou à pignon-crémaillère pour les moyens de réglage actifs, avantageusement dans le cas de dispositifs macroscopiques, dont les fréquences sont suffisamment basses.

Les moyens de réglage 212' comportent également une commande automatique 218 et une commande manuelle externe 216 optionnelle. La commande automatique 218 utilise une contre-réaction intégrée dans le système.

La commande manuelle peut, par exemple servir à réaliser un premier préréglage grossier.

Les moyens de réglage comportent des capteurs (non représentés) aptes à mesurer en temps réel, ou à des instants définis à l'avance par un utilisateur, l'évolution des amplitudes de vibrations auxquelles le système est soumis.

Les capteurs peuvent être du type accéléromètre ou butée de détection d'amplitude de vibrations monté sur la partie mobile 204, et mesurent les variations de l'amplitude de déplacement de la partie mobile 204 relativement à la partie fixe 202.

L'analyse de ces variations d'amplitude est réalisée par une unité électronique (non représentée), qui comporte en mémoire une base de données, dans laquelle est associée à des intervalles de valeurs d'amplitude de mouvement de la partie mobile, une valeur de distance d'entrefer $\Delta$, permettant une récupération d'énergie optimale.

Les parties mobile 204 et fixe 202 sont séparées d'une distance d. Dans l'exemple représenté sur la figure 4, du fait de doigts à profil trapézoïdal, cette distance n'est pas égale à la distance d'entrefer $\Delta$. Il est alors également prévu une carte de correspondance entre la valeur de d et la valeur de $\Delta$.

Si au terme de la comparaison, il apparaît que la distance d'entrefer $\Delta$ est adaptée à l'amplitude de mouvement, la récupération se poursuit. Sinon, la distance d'entrefer $\Delta$ est réglée de manière à ce qu'elle soit adaptée à l'amplitude de mouvement de la partie mobile.

La présente invention permet d'adapter la distance d'entrefer $\Delta$ en conséquence, pour maintenir une variation importante de la capacité variable quelle que soit l'amplitude du déplacement relatif entre les électrodes fixes 202 et mobiles 204.

Les moyens de réglage actifs peuvent être mis en oeuvre dans des systèmes de conversion macroscopiques, pour lesquels on retrouvera également une précision de réglage de l'entrefer de quelques microns comme pour les systèmes passifs décrits précédemment.

Le fonctionnement du système de conversion est alors autonome et auto-adaptatif.

Les moyens de réglage actifs, notamment le ou les actionneurs, peuvent également être réalisés grâce aux technologies de la microélectronique ; ce qui permet d'intégrer à la fois la structure de conversion et les actionneurs, de type microactionneurs pour le réglage de l'entrefer, dans des systèmes de conversion de taille inférieure à quelques mm.

La structure de conversion peut, par exemple être intégrée sur silicium par des procédés voisins de ceux utilisés pour réaliser des microaccéléromètres.

Les mircoactionneurs peuvent être réalisés, par exemple avec des éléments piézoélectriques, par exemple en AlN ou PZT, déposés par pulvérisation cathodique. On pourrait également envisager de réaliser les microactionneurs à partir de films minces magnétostrictifs.

L'unité électronique, qui gère les moyens actifs de réglage, peut être réalisée indépendamment de manière discrète ou/et intégrée, pour minimiser l'encombrement global du système de récupération d'énergie.

Les moyens de réglage actifs sont également adaptés pour permettre un réglage de type passif du système de conversion. Pour cela, il suffit de programmer l'unité électronique, pour que celle-ci active l'actionneur de manière à ce qu'il règle la distance d'entrefer à une valeur donnée avant une phase de conversion d'énergie, et à ce qu'elle la maintienne pendant toute la phase de conversion.

Nous allons maintenant expliquer le fonctionnement d'un système selon la présente invention comportant des moyens de réglage actifs.

Les moyens de réglage peuvent être conçus pour régler au repos la distance d'interface à une valeur fixe, ainsi à chaque début d'une étape de récupération, le système se trouve dans une configuration prédéterminée. On peut également prévoir que la distance de réglage reste égale à la distance réglée à la fin de l'étape de récupération d'énergie précédente.

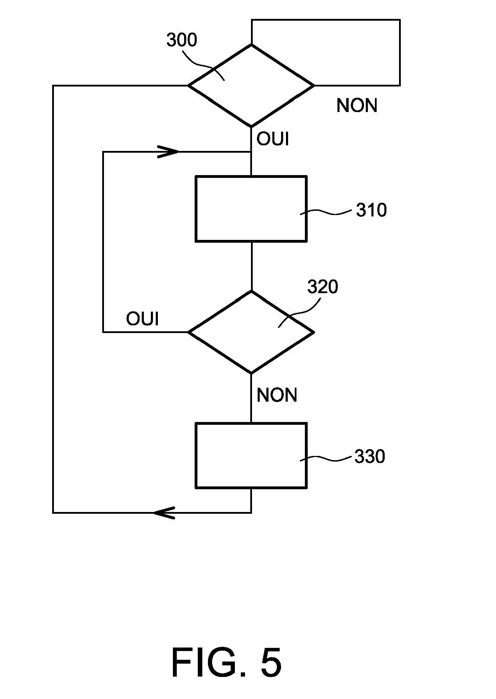

Sur la figure 5, on peut voir un organigramme du fonctionnement du système de la figure 4.

A l'étape 300, le système vérifie s'il détecte l'application d'un effort extérieur, par mise en mouvement de la partie mobile par rapport à la partie fixe.

Si c'est le cas, on passe à l'étape 310, lors de laquelle la récupération d'énergie débute. La ou les électrodes mobiles se rapprochent et s'éloignent alternativement de la partie fixe.

Sinon, le système reste en surveillance.

A l'étape 310, les capteurs mesurent l'amplitude du déplacement de la partie mobile.

A l'étape 320, l'unité électronique compare la valeur de l'amplitude aux valeurs préenregistrées, et détermine une valeur de distance d, et par conséquent une valeur de distance d'entrefer optimale.

Si la valeur d'entrefer réelle correspond à la valeur d'entrefer optimale, aucun réglage n'est effectué et on retourne à l'étape 310 pour poursuivre la récupération d'énergie

Sinon, on passe à l'étape 330 lors de laquelle l'unité électronique ordonne à l'actionneur d'augmenter ou de réduire la distance d, ce qui modifie en conséquent la distance d'entrefer suivant les conclusions de la comparaison.

Puis on retourne à l'étape 300.

**Revendications**

1. Système de conversion d'une énergie mécanique en énergie électrique par conversion électrostatique, comportant au moins une électrode fixe (2, 102, 202) et au moins une électrode mobile (4, 104, 204) apte à être mise en vibration par l'énergie mécanique, lesdites électrodes fixe (2, 102, 202) et mobile (4, 104, 204) étant séparées au repos par un distance d'entrefer ($\Delta$), ledit système comportant des moyens (12, 112, 212, 212') pour modifier la distance d'entrefer ($\Delta$) en fonction de la variation de l'amplitude des vibrations de l'électrode mobile (4, 104, 204).

**2.** Système selon la revendication 1, dans lequel les moyens de réglage (112, 212) permettent un réglage avant une étape de conversion d'énergie.

**3.** Système selon la revendication précédente, dans lequel les moyens de réglage (112) sont formés par un jeu d'entretoises calibrées, destinées à être disposées entre l'électrode fixe (102) et l'électrode mobile (104), une ou plusieurs entretoises pouvant être utilisées.

**4.** Système selon la revendication 2, dans lequel les moyens de réglage passifs (112, 212) sont interposés entre l'électrode fixe (102, 202) et l'électrode mobile (104, 204), et aptes à être commandés pour modifier la distance d'entrefer (Δ).

**5.** Système selon la revendication précédente, dans lequel les moyens de réglage (112, 212) sont du type pignon-crémaillère ou glissière et vis sans fin.

**6.** Système selon la revendication 1, dans lequel les moyens de réglage (212') permettent une modification de la distance d'entrefer (Δ) pendant une étape de conversion d'énergie.

**7.** Système selon la revendication précédente, dans lequel les moyens de réglage (212') comportent un actionneur (214) interposé entre l'électrode fixe (202) et l'électrode mobile (204) et une commande (216, 218) dudit actionneur (214).

**8.** Système selon la revendication précédente, dans lequel l'actionneur (214) peut être un moteur, un vérin, des éléments piézoélectriques et/ou magnétostrictifs.

**9.** Système selon la revendication 7 ou 8, dans lequel la commande (218) est autonome et active l'actionneur (214) automatiquement pour adapter la distance d'entrefer (Δ) à la variation de l'amplitude de vibration.

**10.** Système selon la revendication 9, dans lequel les moyens de réglage (212') comportent des capteurs détectant la variation d'amplitude des vibrations, et dans lequel la commande (218) comporte une unité électronique comportant des cartes de concordance entre des valeurs de distance d'entrefer et des intervalles d'amplitude de déplacement de la partie mobile pour une conversion d'énergie optimale.

**11.** Système selon la revendication précédente, dans lequel les capteurs sont du type accéléromètre ou butée de détection d'amplitude de variation.

**12.** Système selon l'une des revendications 9 à 11, dans lequel les moyens de réglage comportent également une commande manuelle.

**13.** Système selon l'une quelconque des revendications précédentes, comportant plusieurs électrodes mobiles en forme de doigts, et dans lequel l'électrode fixe comporte des doigts, les doigts de l'électrode fixe et les doigts mobiles étant interdigités.

**14.** Système selon la revendication précédente, dans lequel les doigts mobiles se déplacent selon leur plus grande dimension.

**15.** Système selon la revendication 13, dans lequel les doigts se déplacent perpendiculairement à leur plus grande dimension.

**16.** Système selon l'une des revendications 13 à 15, dans lequel les doigts ont une forme trapézoïdale.

**17.** Procédé de conversion d'une énergie mécanique en énergie électrique mettant en oeuvre un système de conversion comportant au moins une électrode fixe et une électrode mobile en regard, et des moyens pour modifier la distance d'entrefer entre l'électrode fixe et l'électrode mobile, comportant l'étape :

   - de réglage de la distance d'entrefer préalablement à la phase de conversion d'énergie, en fonction de la variation de l'amplitude des vibrations de l'électrode mobile.

**18.** Procédé de conversion d'énergie selon la revendication précédente, comportant les étapes

- de détermination de l'amplitude maximale de déplacement attendue de la partie mobile,
- de choix d'une distance d'entrefer maximale, ces étapes étant antérieures à l'étape de réglage de la distance d'entrefer.

**19.** Procédé de conversion d'une énergie mécanique en énergie électrique mettant en oeuvre un système de conversion comportant au moins une électrode fixe et une électrode mobile en regard, et des moyens pour modifier la distance d'entrefer entre l'électrode fixe et l'électrode mobile, comportant l'étape :

- de réglage de la distance d'entrefer pendant la phase de conversion d'énergie, en fonction de la variation de l'amplitude des vibrations de l'électrode mobile.

**20.** Procédé de conversion d'énergie selon la revendication précédente, comportant pendant la phase de conversion d'énergie, les étapes :

- de mesure de l'amplitude de déplacement de la partie mobile pendant la phase de conversion,
- de choix parmi une carte de concordance entre des valeurs de distance d'entrefer et des intervalles d'amplitude pour une récupération d'énergie optimale, ces étapes étant antérieures à l'étape de réglage de la distance d'entrefer.

**21.** Procédé de fabrication d'un système selon l'une des revendications 1 à 5, par électroérosion et découpe laser

**22.** Procédé de fabrication d'un système selon l'une des revendications 1, 6 à 11, dans lequel l'actionneur est intégré sur du silicium.

**23.** Procédé de fabrication selon la revendication précédente, dans lequel l'actionneur est formé par des éléments piézoélectriques déposés par pulvérisation cathodique.

FIG. 1

FIG. 2A

FIG. 2B

FIG. 3A

FIG. 3B

# FIG. 4

FIG. 5

FIG. 6A

FIG. 6B

**EP 1 819 035 A2**

**RÉFÉRENCES CITÉES DANS LA DESCRIPTION**

**Documents brevets cités dans la description**

- US 2005093302 A1